# EUROPEAN PATENT SPECIFICATION

(11) **EP 2 937 480 B1**
(45) Date of publication and mention of the grant of the patent: **15.07.2020**
(21) Application number: 15382179.8
(22) Date of filing: 13.04.2015
(51) Int. Cl.: E03D 3/10, B61D 35/00, B63B 29/14, B60R 15/04, E03D 5/00

(54) **INSTALLATION HAVING A PRESSURIZED FLUSH TANK FOR TOILETS**
INSTALLATION AUFWEISEND EINEN DRUCKSPÜLKASTEN FÜR TOILETTEN
INSTALLATION COMPRENANNT UNE RÉSERVOIR POUR WC À CHASSE D'EAU SOUS PRESSION

(30) Priority: 15.04.2014 ES 201430557
(43) Date of publication of application: 28.10.2015
(73) Proprietor: Rolen Technologies & Products, S.L., 08130 Santa Perpetua de Mogoda (ES)
(72) Inventor: MARÍN GARCÍA, Francisco, 08130 SANTA PERPÈTUA DE MOGODA (ES); POLO RANGEL, Alberto, 08130 SANTA PERPÈTUA DE MOGODA (ES); PÉREZ PLANAS, Miguel, 08130 SANTA PERPÈTUA DE MOGODA (ES); TUSET MESTRE, Miquel, 08130 SANTA PERPÈTUA DE MOGODA (ES)
(74) Representative: Espiell Volart, Eduardo Maria

(56) References cited:
- EP-A1- 2 305 899
- EP-A1- 2 484 574
- CA-A1- 2 175 447
- US-A- 5 035 011

## Description

### OBJECT OF THE INVENTION

The invention, as expressed in the title of the present specification, relates to an installation with greywater recovery, in particular to a pressurized flush tank for toilets, which provides various advantages and innovative characteristics inherent to its particular configuration, which are described in detail below and constitute an improvement on the current prior art.

The object of the present invention focuses specifically on a flush tank applicable to the cleaning of toilets, in particular mobile restroom installations, such as those on trains or other means of transport wherein the available space is very restricted, said tank being unique in that it is a pressurized system that also has a filter incorporated inside the same providing usage and cleaning advantages, in particular for the use thereof in installations that utilize greywater.

### FIELD OF APPLICATION OF THE INVENTION

The field of application of the present invention falls within the industrial sector dedicated to the manufacture and installation of sanitary systems and restroom cubicles, focusing in particular on the area of toilets with pressure operated flush systems.

### BACKGROUND OF THE INVENTION

The existence of restrooms with toilets that incorporate a pressurized flush cistern for saving water during cleaning and, in particular, for saving space is known about, since said systems are usually installed in restroom cubicles on transport means such as trains, for example.

Likewise, the existence of installations that utilize greywater from the washbasin and shower with the same objective of saving water and space is known about.

However, said installations require the incorporation of filtration systems that prevent the passage of foreign element coming from the greywater, since the latter, by its very nature, usually carries soap residues and other biomass residues which, when they accumulate, solidify and form compact masses that could cause undesired blockages in the system.

However, the main problem with these installations is the residues carried in the greywaters themselves, which frequently block the cited filters; the so-called "biofilm" that is created is one of the biggest problems, which is why the continuous cleaning of the same is essential, either by means of periodic and frequent manual intervention for its disassembly and cleaning or by means of introducing chemical agents in the system, which help to dissolve said residues. Alternatively, this could be done by means of a combination of both of the above.

In any case, the consequence of this is increased maintenance costs for the installation and often also an increase in the cost of manufacturing the installation, since it has become more complex as a result of the incorporation of systems that enable the introduction of means for facilitating the disassembly and cleaning of the filters and due to the incorporation, where appropriate, of systems for periodic operation with chemical agents.

Likewise, both the incorporation of the filters at strategic points in the installation and, where appropriate, the incorporation of systems for periodically introducing chemical agents for cleaning such filters, involves the existence of additional elements in the installation which, to a greater or lesser extent, also contribute to an increased volume of elements to be incorporated into the restroom, which, given the purpose thereof, poses an additional problem, since, as already mentioned, it is largely intended for very reduced spaces in which every inch of space counts.

It would therefore be desirable to have a flush system for a toilet that solves the problem described efficiently and practically, this being the essential aim of the present invention.

As a reference to the current prior art, it must be noted that even though different documents that reveal flush systems of the type concerned here are known, at least on the part of the applicant, the existence of another type of pressurized flush tank for toilets is not known nor is a similar application for an invention which has identical or very similar technical, structural and constitutive characteristics as those described herein.

In this context, the following documents are cited as examples of the type of systems proposed herein: utility model ES 1 057 826 U concerning a "Pressurized cistern for a WC"; patent ES 2 288 341 A1, concerning an "Autonomous vacuum and pressure toilet installation" and patent US2013/0036539A1, concerning a "Flushing water container system for flushing water of a mobile toilet".

Document EP 2305899 (DLP LTD) discloses a waste shower water recycle apparatus comprising a waste shower water inlet for receiving draining waste shower water, a potable water inlet, a drain outlet for liquid communication with a drain, a cistern supply outlet for supplying a toilet cistern, flow control means for controlling the flow of waste shower water from the waste shower water inlet to the drain outlet and to the cistern supply outlet, and for controlling the flow of potable water from the potable water Inlet to the cistern supply outlet, and a pump device for moving waste shower water from a drain outlet of a shower to the said waste shower water Inlet. Preferably the waste shower water recycle apparatus comprises a cleansing element for cleaning and sanitising the waste shower water prior to being supplied to the cistern supply outlet.

Document EP 2484574 (ALSTOM TRANSPORT SA) discloses a system for storing and distributing water, the system comprising: - a water tank having a fresh water inlet, a collected water inlet, and a main water outlet; - a fresh water conduit connected to the fresh water inlet; and - a main drain connected to the main water outlet, the system being characterised by a water tank bypass connecting the fresh water conduit to the main drain and by a device for switching the system between a first mode, wherein the bypass is closed and the main water outlet is open, and a second mode, wherein the bypass Is open and the main water outlet is closed.

Document CA 2175447 (GIRARD YVES) discloses a tank to collect water from the washing machine, the tub and shower for the route, filtered directly to the toilet tank. To do so, the semi-dirty water tank is connected to the drains of the washing machine, the tub and the shower. The collected water is prefiltered in such a manner as It contains no visible particles by the naked eye. Water said reservoir is then forwarded to the toilet with a pump with a pressure switch.

Document US 5035011 (ROZENBLATT) discloses a sanitation system, in which grey water from the aircraft lavatory sink is collected and transferred under pressure through a rinse line to flush a toilet bowl when the drain valve is closed. The pressurized lines of the aircraft's potable water supply are used to actuate the diaphragm in the drain valve. Importantly, the drain valve always keeps the pressurized potable water separate from the grey water to prevent unwanted contamination of the aircraft's potable water supply. Moreover, draining of the grey water is automatic upon depressurization of the potable water supply lines.

However, as already mentioned, the existence of a document or patent that describes the present invention, as claimed, has not been found.

### DESCRIPTION OF THE INVENTION

Thus, the installation according to claim 1 proposed by the invention is configured as a remarkable novelty within its field of application, since, based on its implementation and in a specific manner, the ideal objectives previously mentioned are satisfactorily achieved, thereby solving the aforementioned problem, the characterizing details which make this possible and distinguish the invention from that already known about being expediently provided in the claims at the end of this document, which accompany the present specification.

Specifically and as already mentioned, the invention propose a flush tank for cleaning toilets, for particular use in mobile restroom Installations, such as those on trains or similar, which are unique in that they have a filter Incorporated inside them.

In this way, the tank of the invention is configured as a compact filtration unit, which integrates the functions of tank, filtration and pressure pump for cleaning the bowl into one single element, it being particularly advantageous in installations with systems that utilize greywater, in which case it operates as a greywater tank, enabling the water from sinks to be reused in order to clean the toilet bowl.

It is important to point out that incorporating the integrated filter inside the tank provides, in addition to the cited advantage of compacting into one element two essential components of the installation, the advantage of preventing blockages in the filter, primarily caused by accumulations of soap or biomass residues coming from the greywater, without it being necessary to use chemical agents that attack said residues in order to remove them and clean the filter.

This advantage is due to the fact that, when the tank is pressurized, the pressure itself exerted inside when being used causes a mechanical attack on the filter incorporated inside it.

Moreover, this mechanical attack on the filter is reinforced by the very action of water, helping to achieve constant cleaning of the filter since during each use, all types of existing residues are broken down.

Optionally, when a sewage water tank is provided in the restroom, which constitutes a preferred embodiment in the majority of restrooms of the type concerned here, the outlet of the tank is also connected to said sewage water tank. With this connection to the sewage water tank open and the outlet towards the bowl closed, for which the appropriate stopcock is provided, a pressure cycle may be carried out automatically and periodically, by means of which the residues are carried towards the cited sewage water tank as a result of the flow created by the pressurized air.

Consequently, other additional advantages are achieved: on the one hand, those which, for the environment, involve the use of a more ecological system, as chemical substances are not used; and on the other hand, avoiding the need to clean the filter, thereby extending its service life.

The pressurized flush system for toilets described thus consists of an innovative element with structural and constitutive characteristics to date not known for the intended purpose - reasons which, alongside its practical use, provide it with sufficient basis to obtain the privilege of exclusivity sought.

### DESCRIPTION OF THE DRAWINGS

In order to complement the present description, with the aim of aiding a better understanding of the characteristics of the invention, the present specification is accompanied, as an integral of the same, by a plan, in which the following is depicted in an illustrative, non-limiting manner:

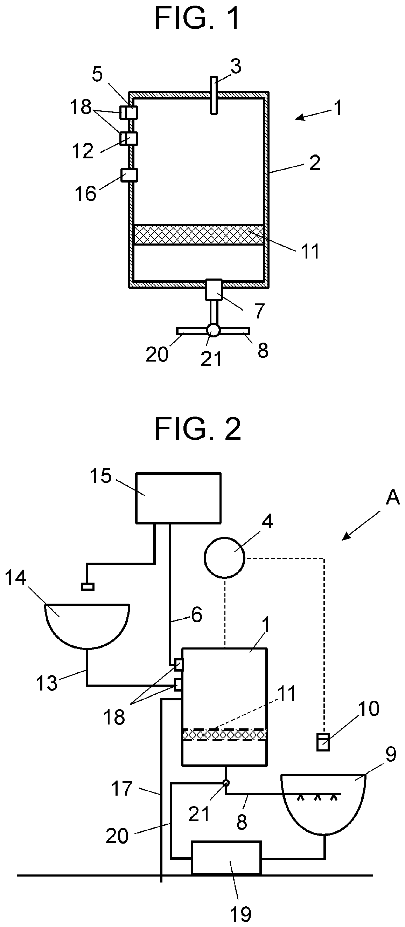

Figure 1 is a schematic cross-sectional elevation of an exemplary embodiment of the pressurized flush tank for toilets, object of the invention, it being possible to observe the essential parts and elements it comprises, as well as its configuration and arrangement; and
Figure 2 is a very schematic diagram of an installation that utilizes greywater with a pressurized flush tank for toilets according to the invention, implemented in the same. It must be noted that the proportions of the different incorporated elements, both in this figure as well as in figure 1, do not correspond to reality, since they are mere depictions of the same.

### PREFERRED EMBODIMENT OF THE INVENTION

In view of the aforementioned figures and in accordance with the numbering adopted, a preferred exemplary embodiment of the pressurized flush tank for toilets according to the invention can be observed, the same comprising the parts and elements indicated and described in detail below.

Thus, as can be seen in said figures, the tank (1) in question is formed by a hermetic receptacle (2) which has at least one fitting (3) for supplying compressed air (4), an inlet (5) for coupling the clean water pipe (6) and an outlet (7) for coupling the flush pipe (8) to the toilet (9), said compressed air (4) being contained in a mechanism that may be actuated by means of an actuator (10), which may be manual or automatic, said tank (1) innovatively incorporating a filter (11), housed inside said receptacle (2).

This filter (11) preferably consists of a screen or sieve with dense netting, which preferably, although not essentially, covers the entire internal perimeter of the receptacle (2), in any case, such that the water that passes through it under pressure from the inlet (5), when the compressed air mechanism (4) is activated, always passes through said filter (11) before being expelled through the outlet (7), usually towards the flush pipe (8).

Preferably, as can be seen in Figure 2, the tank (1) is suitable for being incorporated in an installation (A) with greywater recovery since, also in a preferred manner, it is ideal for incorporation in mobile restrooms, therefore, in an embodiment of the same, the receptacle (2) has a second inlet (12) for coupling the greywater pipe (13) coming from the washbasin (14) or shower, such that its filling combines, as appropriate, the utilization of clean water coming by way of the corresponding pipe (6) from a clean water tank (15) provided for this purpose and which also feeds the tap of the cited washbasin (14) or shower and the utilization of greywater coming from said washbasin (14), in such case always being filtered by the filter (11) before being flushed in order to clean the toilet (9).

Moreover, the installation (A) is completely devoid of chemical attack systems or other additional systems for cleaning said filter (11), since the pressurized mechanical action, when the compressed air mechanism (4) is activated, provides efficient and sufficient cleaning of the filter (11).

It must be noted that, preferably, the receptacle (2) of the pressurized tank (1) also has a second outlet (16), which connects to an overflow and ventilation pipe (17), connected in turn to a lower frame of the train, there being at least one first non-return vale (18) in the greywater inlet (12) in order to prevent the water from exiting through the washbasin (14) when it is pressurized, and a second non-return vale (18) in the clean water inlet (5) for preventing the contamination of the clean water circuit with the greywater.

Optionally, when the restroom (A) has a sewage water tank (19) to which the drainpipe of the bowl (9) is connected, the outlet (8) of the pipe (7) of the receptacle (2) is also connected by means of another additional pipe (20) to aid sewage water tank (19), there being provided a stopcock (21) for closing and opening its passage. With the cited additional connection (20) to the sewage water tank (19) being open, and the flush pipe (8) towards the bowl being closed, this connection allows a pressure cycle for cleaning the residues to be carried out, these residues being collected by the filter (11) as they accumulate inside the pressurized tank (1), causing them to be carried towards the sewage water tank (19) as a result of the flow created by the pressurized air.

## Claims

1. Installation (A) with greywater recovery comprising a pressurized flush tank (1) for toilets, for particular use in cleaning toilets in mobile restroom installations, for example on trains, said pressurized flush tank (1) is formed by a hermetic receptacle (2) with at least one connection (3) for supplying compressed air (4), said pressurized flush tank (1) further comprises:
• an inlet (12) for a greywater pipe (13) coming from a washbasin (14) or shower
• a flushing water, outlet (7) for coupling a flush pipe (8) to a toilet (9), optionally connected to a sewage water tank (19),
wherein said tank (1) incorporates a filter (11) housed inside said receptacle (2) between the inlet (12) for grey water and the flush flushing water output (7), such that water passes through the filter (11) under pressure before being expelled through the outlet (7).

2. Installation (A) with greywater recovery according to claim 1, **characterized in that** the receptacle (2) comprises a second inlet (5) for coupling a clean water pipe (6)

3. Installation (A) with greywater recovery according to any of claims 1 to 2, **characterized in that** the receptacle (2) comprises a second outlet (16) which connects to an overflow and ventilation pipe (17)

## Patentansprüche

1. Installation (A) mit Grauwasserrückgewinnung, umfassend einen Druckspültank (1) für Toiletten, insbesondere zur Reinigung von Toiletten in mobilen Toilettenanlagen, beispielsweise in Zügen, wobei der Druckspültank (1) durch einen hermetischen Behälter (2) mit mindestens einer Verbindung (3) zur Zufuhr von Druckluft (4) ausgebildet ist, wobei der Druckspültank (1) ferner umfasst:
• einen Einlass (12) für ein Grauwasserrohr (13), das aus einem Waschbecken (14) oder einer Dusche kommt
• einen Spülwasserauslass (7) zum Anschließen eines Spülrohrs (8) an eine Toilette (9), wahlweise verbunden mit einem Abwassertank (19),
wobei der Tank (1) einen Filter (11) enthält, der in dem Behälter (2) zwischen dem Einlass (12) für Grauwasser und dem Spülspülwasserauslass (7) untergebracht ist, so dass Wasser unter Druck durch den Filter (11) fließt, bevor es durch den Auslass (7) ausgestoßen wird.

2. Installation (A) mit Grauwasserrückgewinnung nach Anspruch 1, **dadurch gekennzeichnet, dass** der Behälter (2) einen zweiten Einlass (5) zum Anschließen einer Reinwasserleitung (6) umfasst.

3. Installation (A) mit Grauwasserrückgewinnung nach einem der Ansprüche 1 bis 2, **dadurch gekennzeichnet, dass** der Behälter (2) einen zweiten Auslass (16) umfasst, der mit einem Überlauf- und Belüftungsrohr (17) verbunden ist.

## Revendications

1. Installation (A) avec récupération des eaux grises comprenant un réservoir de chasse d'eau sous pression (1) pour toilettes, en vue d'une utilisation particulière dans le nettoyage des toilettes dans les installations de toilettes mobiles, par exemple dans les trains, ledit réservoir de chasse d'eau sous pression (1) est composé d'un récipient hermétique (2) avec au moins un raccordement (3) pour fournir de l'air comprimé (4), ledit réservoir de chasse d'eau sous pression (1) comprend en outre :
• une entrée (12) pour une conduite d'eaux grises (13) provenant d'un lavabo (14) ou d'une douche
• une sortie (7) d'eau de chasse pour le raccordement d'une conduite de chasse d'eau (8) à des toilettes (9),
éventuellement raccordées à un réservoir d'eaux usées (19), dans laquelle ledit réservoir (1) incorpore un filtre (11) logé à l'intérieur dudit récipient (2) entre l'entrée (12) pour les eaux grises et la sortie (7) d'eau de chasse de chasse, de telle sorte que l'eau passe à travers le filtre (11) sous pression avant d'être expulsée par la sortie (7).

2. Installation (A) avec récupération des eaux grises selon la revendication 1, **caractérisée en ce que** le récipient (2) comprend une deuxième entrée (5) pour le couplage d'une conduite d'eau propre (6).

3. Installation (A) avec récupération des eaux grises selon l'une quelconque des revendications 1 à 2, **caractérisée en ce que** le récipient (2) comprend une deuxième sortie (16) qui est raccordée à une conduite de trop-plein et de ventilation (17).
